# EUROPÄISCHE PATENTSCHRIFT

(11) **EP 2 845 999 B1**
(45) Veröffentlichungstag und Bekanntmachung des Hinweises auf die Patenterteilung: **19.07.2017**
(21) Anmeldenummer: 14180043.3
(22) Anmeldetag: 06.08.2014
(51) Int. Cl.: F01D 5/02, F01D 5/06, F04D 29/66, F16F 15/32

(54) **Verfahren zum Auswuchten und zur Montage eines Turbinenrotors**
Method for balancing and for mounting a turbine rotor
Procédé d'équilibrage et de montage d'un rotor de turbine

(30) Priorität: 19.08.2013 DE 102013216377
(43) Veröffentlichungstag der Anmeldung: 11.03.2015
(73) Patentinhaber: Rolls-Royce Deutschland Ltd & Co KG, 15827 Blankenfelde-Mahlow (DE)
(72) Erfinder: Rosenau, Knut, 15378 Herzfelde (DE); Hecken, Reinhold, 14913 Riesdorf (DE)
(74) Vertreter: Hoefer & Partner Patentanwälte mbB

(56) Entgegenhaltungen:
- CN-U- 203 050 800
- FR-A1- 2 974 865
- US-A- 4 586 225
- US-B2- 8 025 483

## Beschreibung

Die Erfindung bezieht sich auf ein Verfahren zum Auswuchten und zur Montage eines Turbinenrotors einer Gasturbine, insbesondere eines zumindest eine Turbinenscheibe umfassenden Turbinenrotors und eines Verdichterrotors gemäß den Merkmalen des Oberbegriffs des Anspruches 1.

Aus dem Stand der Technik ist es bekannt, dass Bauteile von Gasturbinen, welche mit erheblichen Drehzahlen rotieren, ausgewuchtet werden müssen. Dabei werden insbesondere Teilkomponenten separat ausgewuchtet und nachfolgend montiert. Der Stand der Technik zeigt dabei insbesondere Schraubflanschverbindungen, mit welchen ein Turbinenrotor und ein Verdichterrotor verbunden werden. Vielfach weisen diese Teile zueinander einen Presssitz auf. Weiterhin ist es bekannt, axial vor der ersten Turbinenscheibe eine erste vordere Abdeckscheibe vorzusehen, welche Dichtungselemente trägt und zur Kühlluftführung ausgebildet ist. Diese vordere Abdeckscheibe wird vielfach an die erste Turbinenscheibe vormontiert. Dieser vormontierte Turbinenrotor wird anschließend ausgewuchtet, wobei zum Auswuchten Vormontageschrauben verwendet werden, an welchen Wuchtgewichte befestigt sind. Diese Vormontageschrauben verbleiben bei der nachfolgenden Montage am Turbinenrotor, wenn dieser anschließend mit dem Verdichterrotor verbunden wird. Eine derartige Ausgestaltung zeigt beispielsweise die US 2007/0059164 A1.

Um bei der vorbekannten Konstruktion eine Auswuchtung des Turbinenrotors vornehmen zu können, werden an einem Rotorflansch Schraubpositionen für die Auswuchtschrauben, welche die Wuchtgewichte tragen, benötigt. Diese Schrauben werden nach dem Auswuchten nicht mehr gelöst. Sie stehen somit nachfolgend nicht mehr zur Verfügung, um den Turbinenrotor mit dem Verdichterrotor zu verbinden. Vielmehr ist es erforderlich, auf diesem oder einem zweiten Teilkreis zusätzliche Ausnehmungen für Schraubenverbindungen vorzusehen. Hierdurch vergrößert sich der gesamte Durchmesser des Flansches, welcher zur Verbindung zwischen dem Verdichterrotor und dem Turbinenrotor dient. Ein weiterer Nachteil besteht darin, dass sich durch die zusätzlichen, die Wuchtgewichte tragenden Schrauben zusätzliche Teile mit zusätzlichem Gewicht ergeben. Insgesamt ergibt sich somit eine Konstruktion, welche aus Kostengründen unattraktiv ist und welche bei zusätzlichem Gewicht zusätzlichen radialen Bauraum erfordert.

Die US 4 586 225 A beschreibt die Montage eines Turbinenrotors. Dabei werden die Rotorscheiben mittels Zugankern und Hülsen gegeneinander verspannt und in einer Auswuchtvorrichtung ausgewuchtet. Diese verspannte und ausgewuchtete Anordnung der Turbinenscheiben wird mittels einer Transportvorrichtung verspannt und gesichert, so dass der Turbinenrotor nachfolgend gelagert bzw. montiert werden kann.

Der Erfindung liegt die Aufgabe zugrunde, ein Verfahren zum Auswuchten und zur Montage eines Turbinenrotors und eines Verdichterrotors einer Gasturbine zu schaffen, welches bei einfacher Ausgestaltung die Nachteile des Standes der Technik vermeidet und sich durch hohe Betriebssicherheit auszeichnet.

Erfindungsgemäß wird die Aufgabe durch die Merkmalskombination des Anspruchs 1 gelöst, die Unteransprüche zeigen weitere vorteilhafte Ausgestaltungen der Erfindung. Erfindungsgemäß ist somit vorgesehen, dass das Verfahren zum Auswuchten und zur Montage eines zumindest eine Turbinenscheibe umfassenden Turbinenrotors und eines Verdichterrotors einer Gasturbine die fünf Schritte gemäß Anspruch 1 umfasst. In einer besonders günstigen Weiterbildung der Erfindung ist vorgesehen, dass in einem sechsten Schritt weitere, vorher gegebenenfalls von der Spannvorrichtung verdeckte Schraubverbindungen montiert werden. Es stehen somit am Umfang sämtliche Schraubverbindungen zur Verfügung, um den Turbinenrotor mit dem Verdichterrotor zu verbinden. Der Auswuchtvorgang sowie die dafür verwendeten Schrauben beeinträchtigen nicht die Verbindung zwischen dem Turbinenrotor und dem Verdichterrotor. Es ist erfindungsgemäß somit auch nicht erforderlich, auf unterschiedlichen Teilkreisen mehrere Schraubverbindungen im Bereich des Flansches zwischen dem Turbinenrotor und dem Verdichterrotor vorzusehen, welche zum Auswuchten bzw. zur Montage dienen.

In besonders günstiger Ausgestaltung der Erfindung ist vorgesehen, dass die Spannvorrichtung radial innenliegend an der Turbinenscheibe und an der Abdeckscheibe angeordnet wird. Durch den hierfür vorhandenen Bauraum ist es auf einfache Weise möglich, die Spannvorrichtung einzusetzen und zu betätigen. Der üblicherweise radial nach innen zur Triebwerksmittelsachse weisende Flansch zur Verbindung des Verdichterrotors und des Turbinenrotors bietet zudem die Möglichkeit, die Spannvorrichtung anzusetzen.

Zur Vereinfachung der Montage ist es besonders günstig, wenn die Abdeckscheibe mittels eines Presssitzes mit der Turbinenscheibe verbunden wird.

Erfindungsgemäß ist es somit, wie erwähnt, möglich, die Auswuchtung durch Anbringung von Wuchtgewichten an den Schraubverbindungen vorzunehmen. Diese Vorgehensweise ist einfach und kostengünstig und zeichnet sich durch einen hohen Wirkungsgrad aus.

Um den Verdichterrotor auszuwuchten, ergeben sich im Rahmen der Erfindung unterschiedliche Möglichkeiten. Der Verdichterrotor wird vor der Verbindung mit der Turbinenscheibe und der Abdeckscheibe separat ausgewuchtet. Dies kann durch einen separaten Wucht-Flansch erfolgen, an welchem Schrauben mit Wuchtgewichten vorgesehen sind. Es ist jedoch auch möglich, den Flansch des Verdichterrotors, welcher nachfolgend zur Verbindung mit der Turbinenscheibe und der Abdeckscheibe dient, zum Auswuchten zu verwenden. Hierbei werden ebenfalls Schrauben eingesetzt, welche Wuchtgewichte tragen.

Somit werden die Wuchtgewichte, welche zur Auswuchtung der Turbinenscheibe und der Abdeckscheibe gedient haben, sowie die Wuchtgewichte, welche zur Auswuchtung des Vedichterrotors gedient haben, entfernt. Die Größen und Positionen der Wuchtgewichte werden, wie erwähnt, vor ihrer Entfernung in geeigneter Weise gespeichert. Somit ist es nachfolgend möglich, auf der Basis der entfernten Wuchtgewichte des Verdichterrotors und der Turbinenscheibe mit der Abdeckscheibe resultierende Wuchtgewichte zu bestimmen und zu montieren. Die Gesamtzahl der dann verbleibenden Wuchtgewichte wird somit geringer sein, als die vorher vorgesehenen separaten Wuchtgewichte. Auch die Gesamtmasse wird gegebenenfalls reduziert werden können.

Durch die Erfindung ergeben sich, zusätzlich zu den oben beschriebenen Vorteilen, weitere Vorteile. So ist es erfindungsgemäß möglich, zur Kraftübertragung zwischen dem Turbinenrotor und dem Verdichterrotor einen kleinstmöglichen Flanschdurchmesser zwischen Verdichterrotor und Turbinenrotor zu verwenden und dazu sämtliche möglichen Schraubpositionen zu nutzen. Weiterhin vermeidet die Erfindung, im Vergleich zu der oben beschriebenen, aus dem Stand der Technik bekannten Konstruktion erhöhte Lochleibungsspannungen an den größeren Flanschlöchern im Verdichterflansch an den Schraubpositionen der zur Vormontage der Abdeckscheibe und der ersten Turbinenscheibe dienenden Schraubverbindungen.

Im Folgenden wird die Erfindung anhand von Ausführungsbeispielen in Verbindung mit der Zeichnung beschrieben. Dabei zeigt:
- Fig. 1: eine schematische Darstellung eines Gasturbinentriebwerks gemäß der vorliegenden Erfindung;
- Fig. 2: eine schematische Teil-Schnittansicht des Zustands im ersten Verfahrensschritt der Erfindung;
- Fig. 3: eine Ansicht, analog Fig. 2, im zweiten Schritt der Verfahrensabfolge;
- Fig. 4: eine Ansicht, analog Fig. 2 und 3, im dritten Verfahrensschritt;
- Fig. 5: eine Ansicht, analog den Fig. 2 bis 4, im vierten Verfahrensschritt mit vormontiertem Verdichterrotor und gespannter Spannvorrichtung;
- Fig. 6: eine Darstellung, analog Fig. 5, im fünften Verfahrensschritt im montierten Zustand mit geöffneter Spannvorrichtung;
- Fig. 7: eine Darstellung, analog den Fig. 5 und 6, einer Ausgestaltung in Weiterführung der Erfindung, ohne separate stromabwärtige Verdichterwuchtebene;
- Fig. 8: eine Darstellung eines abgewandelten Ausführungsbeispiels analog Fig. 7 mit separater stromabwärtiger Verdichterwuchtebene des Verdichterrotors; und
- Fig. 9: eine vereinfachte Radialschnittansicht unterschiedlicher Wuchtpositionen.

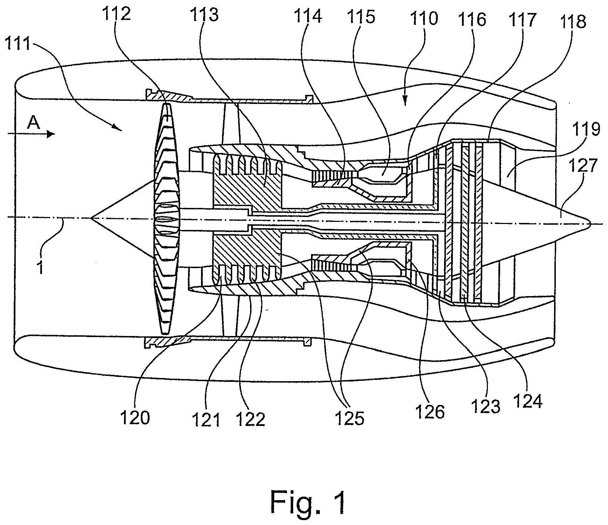

Das Gasturbinentriebwerk 110 gemäß Fig. 1 ist ein allgemein dargestelltes Beispiel einer Turbomaschine, bei der die Erfindung Anwendung finden kann. Das Triebwerk 110 ist in herkömmlicher Weise ausgebildet und umfasst in Strömungsrichtung hintereinander einen Lufteinlass 111, einen in einem Gehäuse umlaufenden Fan 112, einen Mitteldruckkompressor 113, einen Hochdruckkompressor 114, eine Brennkammer 115, eine Hochdruckturbine 116, eine Mitteldruckturbine 117 und eine Niederdruckturbine 118 sowie eine Abgasdüse 119, die sämtlich um eine zentrale Triebwerksmittelachse 1 angeordnet sind.

Der Mitteldruckkompressor 113 und der Hochdruckkompressor 114 umfassen jeweils mehrere Stufen, von denen jede eine in Umfangsrichtung verlaufende Anordnung fester stationärer Leitschaufeln 120 aufweist, die allgemein als Statorschaufeln bezeichnet werden und die radial nach innen vom Triebwerksgehäuse 121 in einem ringförmigen Strömungskanal durch die Kompressoren 113, 114 vorstehen. Die Kompressoren weisen weiter eine Anordnung von Kompressorlaufschaufeln 122 auf, die radial nach außen von einer drehbaren Trommel oder Scheibe 125 vorstehen, die mit Naben 126 der Hochdruckturbine 116 bzw. der Mitteldruckturbine 117 gekoppelt sind.

Die Turbinenabschnitte 116, 117, 118 weisen ähnliche Stufen auf, umfassend eine Anordnung von festen Leitschaufeln 123, die radial nach innen vom Gehäuse 121 in den ringförmigen Strömungskanal durch die Turbinen 116, 117, 118 vorstehen, und eine nachfolgende Anordnung von Turbinenschaufeln 124, die nach außen von einer drehbaren Nabe 126 vorstehen. Die Kompressortrommel oder Kompressorscheibe 125 und die darauf angeordneten Schaufeln 122 sowie die Turbinenrotornabe 126 und die darauf angeordneten Turbinenlaufschaufeln 124 drehen sich im Betrieb um die Triebwerksmittelachse 1.

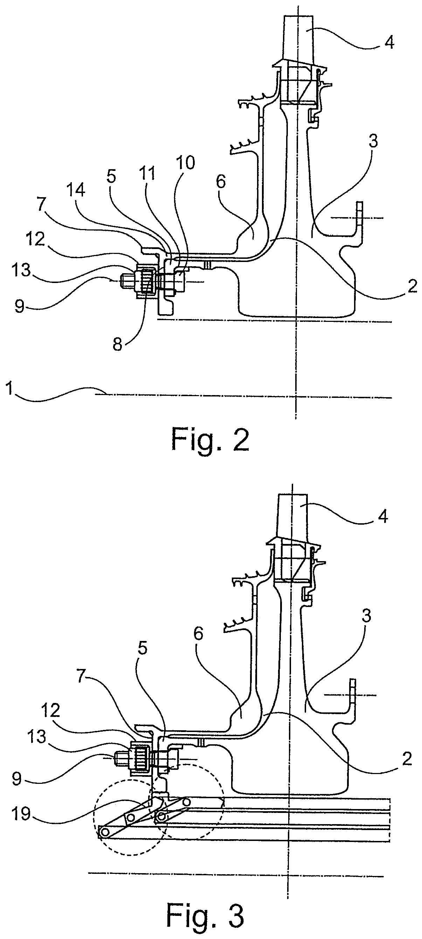

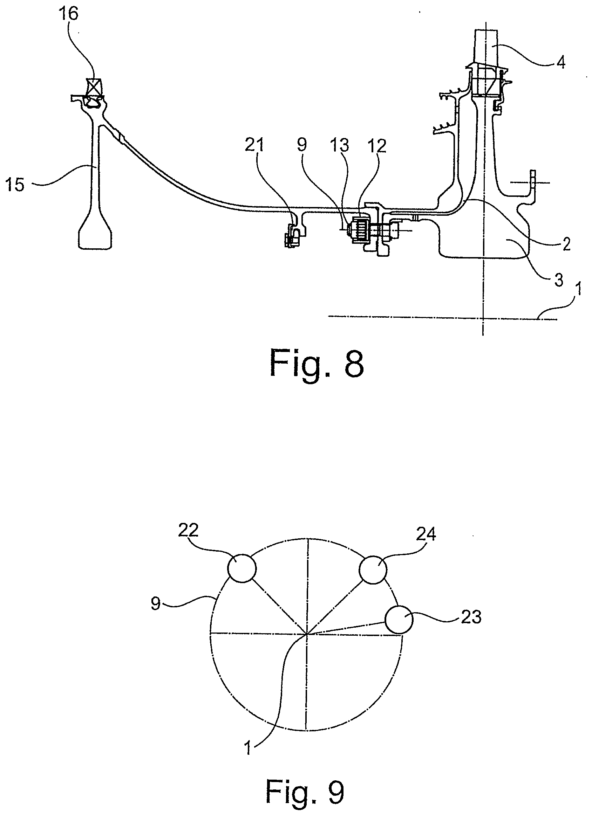

Die Fig. 2 bis 5 zeigen jeweils in vereinfachter Schnittansicht einen Turbinenrotor 2 mit einer ersten Turbinenscheibe 3. Das Bezugszeichen 4 bezeichnet eine Turbinenschaufel. Die Turbinenscheibe 3 umfasst einen Turbinenflansch 5, an welchem, bevorzugt mittels eines Presssitzes, eine vordere Abdeckscheibe 6 angeordnet ist. Die Fig. 2 zeigt einen montierten, ausgewuchteten Zustand. Dabei sind an einem Flansch 7 der vorderen Abdeckscheibe 6 durch geeignete Durchtrittsöffnungen, welche sich auch durch einen Verdichter-Turbinen-Flansch 8 erstrecken, Schrauben 10 vorgesehen, deren Kopfauflage mit dem Bezugszeichen 11 versehen ist und welche auf einem Teilkreisdurchmesser 9 angeordnet sind (s. auch Fig. 9). An den Schrauben 10 sind Wuchtgewichte 12 vorgesehen, welche mittels Muttern 13 gesichert sind. Das Bezugszeichen 14 zeigt den erwähnten radialen Presssitz zwischen dem Turbinenflansch 5 und dem Flansch 7 der Abdeckscheibe 6.

Die Fig. 2 zeigt somit den vormontierten, ausgewuchteten Zustand gemäß Verfahrensschritt 1.

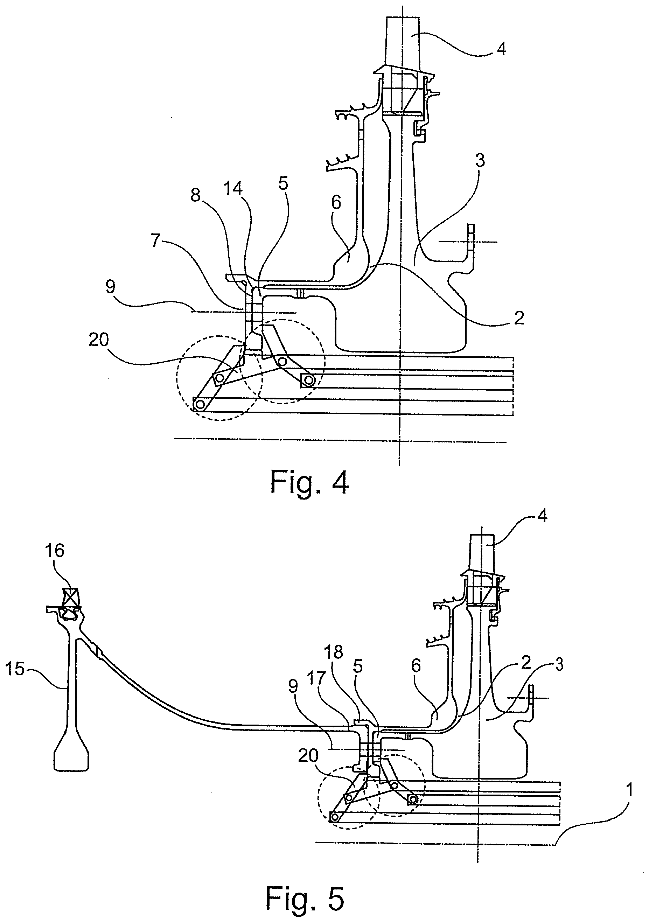

Die Fig. 3 zeigt den zweiten Verfahrensschritt, bei welchem eine Spannvorrichtung 19 im geöffneten Zustand durch eine zentrische Ausnehmung oder Bohrung eingeführt wird, um den Flansch 7 der Abdeckscheibe 6 und den Turbinenflansch 5 gegeneinander zu verspannen, so wie dies in Fig. 4 im dritten Verfahrensschritt dargestellt ist. Die Fig. 4 zeigt, dass die Schrauben 10 zusammen mit den Wuchtgewichten 12 entfernt wurden.

Die Fig. 5 zeigt, dass bei gespannter Spannvorrichtung 20 ein mit Verdichterschaufeln 16 versehener Verdichterrotor 15 positioniert ist. Dieser weist einen Verdichterflansch 17 auf, welcher ebenfalls mit Durchtrittsöffnungen für die Schrauben 10 versehen ist.

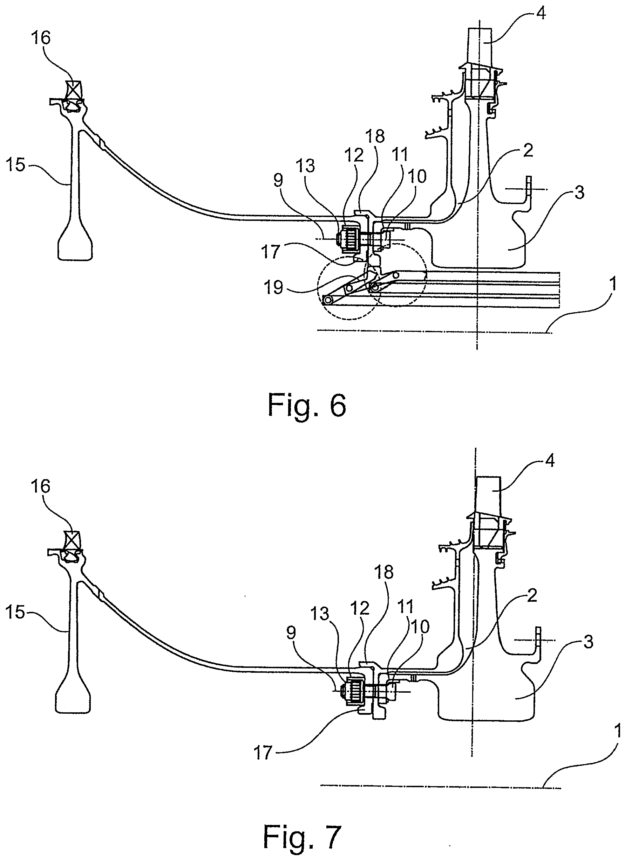

Die Fig. 6 zeigt den fünften Verfahrensschritt, bei welchem die Schrauben 10 zusammen mit den geeigneten Wuchtgewichten 12 montiert wurden. Die Spannvorrichtung 19 ist im geöffneten Zustand dargestellt und kann nachfolgend entnommen werden.

Die Fig. 7 zeigt eine Ausgestaltungsvariante, bei welcher kein zusätzlicher Wuchtflansch am Verdichterrotor 15 vorgesehen ist. Dieser wird vielmehr dadurch ausgewuchtet, dass an dem Verdichterflansch 17 geeignete Schrauben 10 mit Wuchtgewichten 12 vormontiert werden. Diese werden, gemäß dem in Fig. 5 gezeigten vierten Schritt, bei Speicherung der Position und Größe der Wuchtgewichte 12 entnommen, um die in Fig. 6 gezeigte Montage durchführen zu können. Die Fig. 7 zeigt somit den fertigmontierten Zustand, welcher nachfolgend in Zusammenhang mit Fig. 9 beschrieben werden wird.

Die Fig. 9 zeigt dabei einen Teilkreis 9, an welchem an Umfangspositionen 22 Wuchtgewichte 12 des Turbinenrotors 2, und an Umfangspositionen 23 Wuchtgewichte 12 des Verdichterrotors 15 eingezeichnet sind. Dies sind die gespeicherten und vorgemerkten Positionen aus dem vorhergehenden Wuchtvorgang. Aus diesen Umfangspositionen 22 und 23 errechnen sich nachfolgend resultierende Umfangspositionen 24 und Größen der Wuchtgewichte 12, welche die Wuchtgewichte 12 an den Positionen 22 und 23 ersetzen.

Die Fig. 8 zeigt eine abgewandelte Ausgestaltungsform analog Fig. 7, bei welcher (Bezugszeichen 21) eine separate stromabwärtige Verdichterwuchtebene vorgesehen ist, an welcher zusätzliche Wuchtgewichte montiert werden können. Diese werden wie in Fig. 9 beschrieben, durch resultierende Wuchtgewichte 12 ersetzt. Zusammenfassend ist somit folgendes festzustellen:
Die vorliegende Erfindung nutzt alle Schraubpositionen auf dem Teilkreis 9 des Verdichter-Turbinen-Flansches 8 zur Kraftübertragung zwischen erster Turbinenscheibe 3 und Verdichterrotor 15.

Dies wird im ersten Schritt dadurch erreicht, dass die vordere Abdeckscheibe 6 über einen Presssitz 14 zur ersten Turbinenscheibe 3 positioniert und mit einigen oder allen Schrauben 10 am Verdichter-Turbinen-Flansch 8 befestigt wird. Anschließend wird der Turbinenrotor 2 gewuchtet.

Im zweiten Schritt wird nach dem Wuchten eine Spannvorrichtung 19 in die Bohrung durch die erste Turbinenscheibe 3 und die Bohrung im Flansch der vorderen Abdeckscheibe 6 eingeführt, und der Flansch 7 der vorderen Abdeckscheibe 6 und der Turbinenflansch 5 werden axial mit der Spannvorrichtung 19, 20 verspannt.

Im dritten Schritt werden die Schrauben 10 am Verdichter-Turbinen-Flansch 8 entfernt. Die Spannvorrichtung 20 verhindert dabei ein Verrutschen der vorderen Abdeckscheibe 6 auf dem Presssitz 14 zwischen Turbinenflansch 5 und Flansch der vorderen Abdeckscheibe 6 und vermeidet damit Unwuchten des bereits gewuchteten Turbinenrotors 2.

Der Turbinenrotor 2 wird im vierten Schritt beispielsweise über einen Presssitz 18 oder eine Axialkupplung und mittels einiger oder aller Schrauben 10 am Verdichter-Turbinen-Flansch 8 an den Verdichterrotor 15 montiert. Im fünften Schritt wird die Spannvorrichtung 19 entfernt und die von der Spannvorrichtung 20 gegebenenfalls verdeckten Schraubpositionen auf dem Teilkreis 9 werden im sechsten Schritt mit den Schrauben 10 verschraubt.

In einer ersten Ausführung hat der Verdichter eine separate stromabwärtige Wuchtebene 21.

In einer alternativen Ausführung hat der Verdichterrotor 15 keine separate stromabwärtige Wuchtebene 21. Der Verdichterrotor 15 wird bei dieser Ausführung am Verdichter-Turbinen-Flansch 8 mit Wuchtgewichten 12 gewuchtet. Die stromaufwärtigen Wuchtgewichte 12 werden beim Wuchten des Turbinenrotors 2 an den Verdichter-Turbinen-Flansch 8 montiert. Vor der Montage des Turbinenrotors 2 an den Verdichterrotor 15 werden die Wuchtgewichte 12 vom Verdichterrotor 15 und vom Turbinenrotor 2 demontiert. Aus den vorherigen Umfangspositionen 22 der Wuchtgewichte 12 am Turbinenrotor 2 und den vorherigen Umfangspositionen 23 der Wuchtgewichte 12 am Verdichterrotor 15 werden die resultierenden Wuchtgewichte 12 am Verdichter-Turbinen-Flansch 8 und ihre resultierenden Umfangspositionen 24 errechnet und bei der Montage des Turbinenrotors 2 an den Verdichterrotor 15 am Verdichter-Turbinen-Flansch 8 montiert.

### Bezugszeichenliste:

- 1: Triebwerksmittelachse
- 2: Turbinenrotor
- 3: Erste Turbinenscheibe
- 4: Turbinenschaufel
- 5: Turbinenflansch
- 6: vordere Abdeckscheibe
- 7: Flansch der vorderen Abdeckscheibe
- 8: Verdichter-Turbinen-Flansch
- 9: Teilkreisdurchmesser mit Schraubpositionen am Verdichter-Turbinen-Flansch
- 10: Schrauben am Verdichter-Turbinen-Flansch
- 11: Kopfauflage der Schrauben am Verdichter-Turbinen-Flansch
- 12: Wuchtgewichte am Verdichter-Turbinen-Flansch
- 13: Muttern am Verdichter-Turbinen-Flansch
- 14: Presssitz zwischen Turbinenflansch und Flansch der vorderen Abdeckscheibe
- 15: Verdichterrotor
- 16: Verdichterschaufel
- 17: Verdichterflansch
- 18: Presssitz zwischen Flansch der vorderen Abdeckscheibe und Verdichterflansch
- 19: Spannvorrichtung, geöffnet
- 20: Spannvorrichtung, gespannt
- 21: Separate stromabwärtige Verdichterwuchtebene
- 22: Umfangspositionen der Wuchtgewichte 12 am Turbinenrotor 2
- 23: Umfangspositionen der Wuchtgewichte 12 am Verdichterrotor 15
- 24: Resultierende Umfangspositionen der Wuchtgewichte 12 am Verdichter-Turbinen-Flansch
- 110: Gasturbinentriebwerk / Kerntriebwerk
- 111: Lufteinlass
- 112: Fan
- 113: Mitteldruckkompressor (Verdichter)
- 114: Hochdruckkompressor
- 115: Brennkammer
- 116: Hochdruckturbine
- 117: Mitteldruckturbine
- 118: Niederdruckturbine
- 119: Abgasdüse
- 120: Leitschaufeln
- 121: Triebwerksgehäuse
- 122: Kompressorlaufschaufeln
- 123: Leitschaufeln
- 124: Turbinenschaufeln
- 125: Kompressortrommel oder -scheibe
- 126: Turbinenrotornabe
- 127: Auslasskonus

## Patentansprüche

1. Verfahren zum Auswuchten und zur Montage eines zumindest eine Turbinenscheibe (3) mit einem Turbinenflansch (5) und einer vorderen Abdeckscheibe (6) mit einem Flansch (7) umfassenden Turbinenrotors (2) und eines Verdichterrotors (15) mit einem Verdichterflansch (17) einer Gasturbine,
- wobei in einem ersten Schritt der Flansch (7) der vorderen Abdeckscheibe (6) mittels Schraubverbindungen (10) an dem Turbinenflansch (5) der Turbinenscheibe (3) befestigt wird und die Turbinenscheibe (3) zusammen mit der Abdeckscheibe (6) durch Anbringung von Wuchtgewichten (12) an geeigneten Umfangspositionen (22) der Schraubverbindungen (10) ausgewuchtet wird,
- wobei in einem zweiten Schritt die Flansche (5, 7) der Turbinenscheibe (3) und der Abdeckscheibe (6) mittels einer Spannvorrichtung (19, 20) verspannt werden,
- wobei in einem dritten Schritt die Schraubverbindungen (10) des ersten Schrittes entfernt werden, wobei die Wuchtgewichte (12) der Auswuchtung der Turbinenscheibe (3) und der Abdeckscheibe (6) an den Umfangspositionen (22) der Wuchtgewichte (12) am Turbinenrotor (2) vor der Montage des Verdichterrotors (15) entfernt werden,
- wobei in einem vierten Schritt der Flansch (5) der Turbinenscheibe (3) und der Flansch (7) der Abdeckscheibe (6) mit dem Flansch (17) des Verdichterrotors (15) mittels Schraubverbindungen (10) verbunden werden, wobei der Verdichterrotor (15) vor der Verbindung mit der Turbinenscheibe (3) und der Abdeckscheibe (6) mit Wuchtgewichten (12) ausgewuchtet wird,
- und die Wuchtgewichte (12) der Auswuchtung des Verdichterrotors (15) an den Umfangspositionen (23) der Wuchtgewichte (12) am Verdichterrotor (15) vor der Montage des Verdichterrotors (15) entfernt werden,
- wobei in einem fünften Schritt die Spannvorrichtung (19, 20) entfernt wird, und
- wobei, auf der Basis der entfernten Wuchtgewichte (12) an den Umfangspositionen (23) der Wuchtgewichte (12) am Verdichterrotor (15) und der mit der Abdeckscheibe (6) verbundenen Turbinenscheibe (3), resultierende Wuchtgewichte (12) an den Umfangspositionen (22) der Wuchtgewichte (12) am Turbinenrotor (2) bestimmt und an resultierenden Umfangspositionen (24) der Schraubverbindungen (10) montiert werden.

2. Verfahren nach Anspruch 1, **dadurch gekennzeichnet, dass** in einem sechsten Schritt weitere, vorher von der Spannvorrichtung (19, 20) verdeckte Schraubverbindungen (10) montiert werden.

3. Verfahren nach Anspruch 1 oder 2, **dadurch gekennzeichnet, dass** die Spannvorrichtung (19, 20) radial innenliegend an der Turbinenscheibe (3) und der Abdeckscheibe (6) angeordnet wird.

4. Verfahren nach einem der Ansprüche 1 bis 3, **dadurch gekennzeichnet, dass** die Abdeckscheibe (6) mittels eines Presssitzes (18) mit der Turbinenscheibe (3) verbunden wird.

5. Verfahren nach einem der Ansprüche 1 bis 4, **dadurch gekennzeichnet, dass** der Verdichterrotor (15) am Verdichterflansch (17) oder einer separaten stromabwärtigen VerdichterWuchtebene (21) mit Wuchtgewichten (12) ausgewuchtet wird.

## Claims

1. Method for balancing and assembling a turbine rotor (2) including at least one turbine disk (3) with a turbine flange (5) and a front cover disk (6) with a flange (7), as well as a compressor rotor (15) with a compressor flange (17) of a gas turbine,
- where in a first step, the flange (7) of the front cover disk (6) is fastened by means of bolted connections (10) to the turbine flange (5) of the turbine disk (3), and the turbine disk (3) is balanced together with the cover disk (6) by attaching balancing weights (12) at suitable circumferential positions (22) of the bolted connections (10),
- where in a second step, the flanges (5, 7) of the turbine disk (3) and the cover disk (6) are braced by means of a clamping device (19, 20),
- where in a third step the bolted connections (10) used in the first step are removed, where the balancing weights (12) used for balancing of the turbine disk (3) and cover disk (6) at the circumferential positions (22) of the balancing weights (12) on the turbine rotor (2) are removed before the compressor rotor (15) is fitted,
- where in a fourth step the flange (5) of the turbine disk (3) and the flange (7) of the cover disk (6) are connected to the flange (17) of the compressor rotor (15) by means of bolted connections (10), where the compressor rotor (15) is balanced before connection to the turbine disk (3) and the cover disk (6) using balancing weights (12),
- and where the balancing weights (12) at the circumferential positions (23) of the balancing weights (12) on the compressor rotor (15) used for balancing of the compressor rotor (15) are removed before the compressor rotor (15) is fitted,
- where in a fifth step the clamping device (19, 20) is removed, and
- where, based on the removed balancing weights (12) at the circumferential positions (23) of the balancing weights (12) on the compressor rotor (15) and the turbine disk (3) connected to the cover disk (6), resultant balancing weights (12) at the circumferential positions (22) of the balancing weights (12) on the turbine rotor (2) are determined and fitted at resultant circumferential positions (24) of the bolted connections (10).

2. Method in accordance with Claim 1, **characterized in that** in a sixth step further bolted connections (10), previously concealed by the clamping device (19, 20), are fitted.

3. Method in accordance with Claim 1 or 2, **characterized in that** the clamping device (19, 20) is arranged radially inside on the turbine disk (3) and on the cover disk (6).

4. Method in accordance with one of the Claims 1 to 3, **characterized in that** the cover disk (6) is connected by means of a press fit (18) to the turbine disk (3).

5. Method in accordance with one of the Claims 1 to 4, **characterized in that** the compressor rotor (15) is balanced on the compressor flange (17) or a separate downstream compressor balancing plane (21) using balancing weights (12).

## Revendications

1. Procédé pour l'équilibrage et le montage d'un rotor de turbine (2) comprenant au moins un disque de turbine (3) avec une bride de turbine (5) et un disque de recouvrement avant (6) avec une bride (7), et d'un rotor de compresseur (15) avec une bride de compresseur (17) d'une turbine à gaz,
- sachant qu'au cours d'une première étape, la bride (7) du disque de recouvrement avant (6) est fixée à la bride de turbine (5) du disque de turbine (3) au moyen de raccords à vis (10) et que le disque de turbine (3) est équilibré avec le disque de recouvrement (6) en plaçant des masses d'équilibrage (12) aux positions circonférentielles appropriées (22) des raccords à vis (10),
- sachant qu'au cours d'une deuxième étape, les brides (5, 7) du disque de turbine (3) et du disque de recouvrement (6) sont serrées au moyen d'un dispositif de serrage (19, 20),
- sachant qu'au cours d'une troisième étape, les raccords à vis (10) de la première étape sont démontés, sachant que les masses (12) pour l'équilibrage du disque de turbine (3) et du disque de recouvrement (6) situées aux positions circonférentielles (22) des masses d'équilibrage (12) sur le rotor de turbine (2) sont retirées avant le montage du rotor de compresseur (15),
- sachant qu'au cours d'une quatrième étape, la bride (5) du disque de turbine (3) et la bride (7) du disque de recouvrement (6) sont reliées à la bride (17) du rotor de compresseur (15) au moyen de raccords à vis (10), sachant que le rotor de compresseur (15) est équilibré à l'aide de masses d'équilibrage (12) avant le raccord au disque de turbine (3) et au disque de recouvrement (6),
- et sachant que les masses (12) pour l'équilibrage du rotor de compresseur (15) situées aux positions circonférentielles (23) des masses d'équilibrage (12) sur le rotor de compresseur (15) sont retirées avant le montage du rotor de compresseur (15),
- sachant qu'au cours d'une cinquième étape, le dispositif de serrage (19, 20) est démonté, et
- sachant que sur la base des masses d'équilibrage (12) retirées aux positions circonférentielles (23) des masses d'équilibrage (12) sur le rotor de compresseur (15) et le disque de turbine (3) relié au disque de recouvrement (6) sont déterminées des masses d'équilibrage (12) résultantes aux positions circonférentielles (22) des masses d'équilibrage (12) sur le rotor de turbine (2), lesquelles masses d'équilibrage sont montées aux positions circonférentielles résultantes (24) des raccords à vis (10).

2. Procédé selon la revendication n° 1, **caractérisé en ce qu'**au cours d'une sixième étape, d'autres raccords à vis (10) précédemment cachés par le dispositif de serrage (19, 20) sont montés.

3. Procédé selon la revendication n° 1 ou n° 2, **caractérisé en ce que** le dispositif de serrage (19, 20) est disposé radialement à l'intérieur du disque de turbine (3) et du disque de recouvrement (6).

4. Procédé selon une des revendications n° 1 à n° 3, **caractérisé en ce que** le disque de recouvrement (6) est relié au disque de turbine (3) au moyen d'un ajustage serré (18).

5. Procédé selon une des revendications n° 1 à n° 4, **caractérisé en ce que** le rotor de compresseur (15) est équilibré avec des masses d'équilibrage (12) sur la bride (17) de compresseur ou à un niveau d'équilibrage (21) du compresseur séparé, situé en aval.
